(19) Europäisches Patentamt
European Patent Office
Office européen des brevets

(11) **EP 4 047 330 A1**

(12) **EUROPÄISCHE PATENTANMELDUNG**

(43) Veröffentlichungstag:
**24.08.2022 Patentblatt 2022/34**

(21) Anmeldenummer: **22157492.4**

(22) Anmeldetag: **18.02.2022**

(51) Internationale Patentklassifikation (IPC):
*G01G 19/02* (2006.01)     *G01G 19/08* (2006.01)

(52) Gemeinsame Patentklassifikation (CPC):
**G01G 19/022; G01G 19/086**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **19.02.2021 DE 202021100823 U**

(71) Anmelder: **Alois Kober GmbH**
**89359 Kötz (DE)**

(72) Erfinder:
• **Harfmann, Patrick**
  **89129 Langenau (DE)**
• **Walter, Julian**
  **86479 Aichen (DE)**

(74) Vertreter: **ERNICKE Patent- und Rechtsanwälte PartmbB**
**Beim Glaspalast 1**
**86153 Augsburg (DE)**

(54) **ERMITTLUNGSMODUL, ERMITTLUNGSVERFAHREN, RANGIERSYSTEM UND ANHÄNGER**

(57) Die Erfindung betrifft ein Ermittlungsmodul (1) und ein Verfahren zur Ermittlung der Masse (m) eines abgekuppelten Anhängers (3), der ein Rangierantriebssystem (2) aufweist, welches mindestens eine Antriebseinheit (14) für den drehenden Antrieb von beidseitigen Anhängerrädern (12,13) und einen Messwertgeber (18) für das Antriebsmoment oder ein Äquivalent sowie einen Messwertgeber (19) für die Antriebsbeschleunigung oder ein Äquivalent umfasst. Das Ermittlungsmodul (1) bildet bei dem Ermittlungsprozess eine Steuer- und Signalverbindung (29) mit dem Rangierantriebssystem (2) und steuert das Rangierantriebssystem (2) derart, dass es den abgekuppelten Anhänger (3) entlang einer bevorzugt ebenen Fahrstrecke (x) aus dem Stillstand mit maximaler Beschleunigung bis zu einer konstanten Fahrt mit maximaler Geschwindigkeit bewegt, wobei das Ermittlungsmodul (1) die Messwerte der Messwertgeber (18,19) aufnimmt und daraus die Masse (m) des abgekuppelten Anhängers (3) berechnet.

**Fig. 1**

EP 4 047 330 A1

**Beschreibung**

Die Erfindung betrifft ein Ermittlungsmodul und ein Verfahren zur Ermittlung der Masse (m) eines abgekuppelten Anhängers mit Rangiersystem mit den Merkmalen im Oberbegriff der selbstständigen Ansprüche.

Die EP 3 128 299 A1 zeigt ein Antriebssystem für einen Anhänger, welches eine Steuerung und für jede Seite des Anhängers mindestens eine Antriebsvorrichtung mit einem Gleichstrommotor für den Antrieb der Anhängerräder umfasst. Das Antriebssystem umfasst ferner Vorrichtungen zur Ermittlung der Stromaufnahme und der Drehzahl der Motoren, einen Auffahrtskeil mit einem ebenen Abschnitt und einem keilförmigen Abschnitt mit bekanntem Steigungswinkel sowie ein Modul zur Berechnung der Anhängermasse auf. Die Anhängermasse wird anhand eines Unterschieds der ermittelten Motorstromaufnahme auf den Abschnitten mit unterschiedlicher Steigung des Auffartskeils berechnet unter Berücksichtigung der vorgegebenen Drehzahl und der Temperatur.

Es ist Aufgabe der vorliegenden Erfindung, eine bessere Ermittlungstechnik für die Masse eines abgekuppelten Anhängers aufzuzeigen.

Die Erfindung löst diese Aufgabe mit den Merkmalen in den selbstständigen Ansprüchen.

Die beanspruchte Ermittlungstechnik, d.h. das Ermittlungsmodul, das Ermittlungsverfahren, das damit ausgerüstete Rangiersystem, der Anhänger, haben verschiedene Vorteile.

Die beanspruchte Massenermittlungstechnik ist besonders leistungsstark, aufwandsarm, sicher sowie leicht und ergonomisch handhabbar. Sie kann ohne einen in mehrfacher Zahl am Anhänger mitzuführenden Auffahrtskeil auskommen. Die Masse des abgekuppelten Anhängers lässt sich aus dem Stand und an beliebig geeigneten Stellen mit einem ausreichend festen, bevorzugt ebenen Untergrund durchführen. Der Platzbedarf hierfür ist minimal.

Die Ermittlungstechnik kann mit den an einem Rangiersystem bereits vorhandenen Komponenten, insbesondere Messwertgebern und eventuell einer Steuereinrichtung, auskommen. Das Ermittlungsmodul kann den Ermittlungsprozess eigenständig und automatisch durchführen. Es kann als Hardwaremodul und/oder als Softwaremodul ausgebildet sein. Das Ermittlungsmodul kann in einer mobilen und insbesondere tragbaren Fernbedienung, z.B. einem dedizierten Gerät oder einem universellen tragbaren Computer, insbesondere Smartphone, angeordnet sein.

Ein Rangiersystem und ggfs. ein Anhänger können mit einem Ermittlungsmodul herstellerseitig und in der Erstausrüstung ausgestattet sein. Andererseits können vorhandene Rangiersysteme und ggfs. Anhänger mit einem Ermittlungsmodul nachgerüstet oder umgerüstet werden.

In einem eigenständigen Erfindungsaspekt sehen das Ermittlungsmodul und das Ermittlungsverfahren vor, dass das Ermittlungsmodul sich bei einem Ermittlungsprozess in einer Steuer- und Signalverbindung mit dem Rangierantriebssystem befindet oder gebracht werden kann und das Rangierantriebssystem derart steuert, dass es den abgekuppelten Anhänger entlang einer bevorzugt ebenen Fahrstrecke (x) aus dem Stillstand mit maximaler Beschleunigung bis zu einer konstanten Fahrt mit maximaler Geschwindigkeit bewegt, wobei das Ermittlungsmodul die Messwerte der Messwertgeber aufnimmt und daraus die Masse (m) des abgekuppelten Anhängers berechnet.

In einem anderen und eigenständigen Erfindungsaspekt sehen das Ermittlungsmodul und das Ermittlungsverfahren vor, dass das Ermittlungsmodul bei einem Ermittlungsprozess sich in einer Steuer- und Signalverbindung mit dem Rangiersystem befindet oder gebracht werden kann und das Rangiersystem derart ansteuert, dass das Rangiersystem den abgekuppelten Anhänger mit reversierenden Fahrbewegungen über eine Fahrstrecke (x) auf dem Untergrund in Vorwärtsrichtung (V) und in Rückwärtsrichtung (R) bewegt. Das Ermittlungsmodul nimmt bei diesen Fahrbewegungen in Vorwärts- und Rückwärtsrichtung jeweils die Messwerte der Messwertgeber des Rangiersystems auf und berechnet daraus die Masse (m) des abgekuppelten Anhängers. Das Ermittlungsmodul kann Steuer- und Rechenprozesse durchführen. Es kann ggf. die aufgenommenen Messwerte speichern, eine Mittelwertbildung anwenden und mit Gleitkommazahl rechnen. Durch die Vorwärts- und Rückwärtsfahrt sowie die bevorzugte Mittelwertbildung ergeben sich Vorteile für die Mess- und Ermittlungsgenauigkeit. Äußere Einflüsse, wie z.B. durch eine evtl. Steigung der Fahrstrecke (x), durch Radlenkerstellungen, Radbremsen oder dgl. können kompensiert werden.

Die mindestens eine Antriebseinheit kann dabei beliebig ausgebildet sein. Wenn die mindestens eine Antriebseinheit ein Antriebsmittel mit einem elektrischen Gleichstrommotor aufweist, sehen das Ermittlungsmodul und das Ermittlungsverfahren vor, dass das Ermittlungsmodul den Messwert für den maximalen Motorstrom und den bei konstanter Fahrt anliegenden Messwert für den niedrigeren Motorstrom vom Messwertgeber aufnimmt, wobei auf Basis der Messwertdifferenz das Antriebsmoment ermittelt wird. Die Momentermittlung kann im Ermittlungsmodul, im Messwertgeber oder an anderer Stelle vorgenommen werden.

Das Ermittlungsmodul und das Ermittlungsverfahren gemäß der beiden eigenständigen Erfindungsaspekte können unabgängig voneinander genutzt werden. Beim anderen Erfindungsaspekt können die Fahrbewegungen und die Messwertaufnahme sowie die Massenberechnung in anderer Weise als beim einen Erfindungsaspekt erfolgen. Beim einen Erfindungsaspekt sind reversierende Fahrbewegungen nicht zwingend erforderlich. Es kann eine einzelne Fahrbewegung ausreichen, z.B. in Vorwärtsrichtung.

In einer Ausführung von Ermittlungsmodul und Ermittlungsverfahren werden die beiden eigenständigen Erfindungsaspekte in Kombination benutzt.

Die beim Rangiersystem vorzugsweise bereits vorhandenen Messwertgeber können das Antriebsmoment und die Antriebsbeschleunigung direkt oder über ein Äquivalent erfassen und an das Ermittlungsmodul durch die Signalverbindung übermitteln. Das Rangiersystem kann dabei eine einzelne oder mehrere Antriebseinheiten für den drehenden Antrieb der beidseitig am Anhänger angeordneten Anhängerräder aufweisen.

In einer bevorzugten Ausführungsform nehmen die Messwertgeber als Äquivalent für das Antriebsmoment den Motorstrom einer einzeln oder mehrfach vorhandenen elektromotorischen Antriebseinheit auf. Als Äquivalent für die Antriebsbeschleunigung des Anhängers kann z.B. die Antriebsgeschwindigkeit oder die Antriebsdrehzahl der ein oder mehreren Antriebseinheiten über der Zeit erfasst werden.

Eine direkte Momentenerfassung ist über Momentengeber an geeigneter Stelle möglich, wobei ggf. eine Übersetzung und ein Wirkungsgrad zu berücksichtigen sind. Eine direkte Beschleunigungserfassung ist ebenfalls z.B. über Beschleunigungsgeber möglich. Hierbei kann ein Beschleunigungsgeber einer Fahrstabilisierungseinrichtung, z.B. Schlingerbremse, oder dgl. benutzt werden.

Das Ermittlungsmodul steuert bei dem anderen Erfindungsaspekt das Rangiersystem vorzugsweise derart an, dass die reversierenden Fahrbewegungen einander entgegengesetzt und entlang der gleichen Fahrstrecke (x) ausgerichtet sind. Die reversierenden Fahrbewegungen und die Fahrstrecke (x) sind vorzugsweise gerade ausgerichtet. Sie sind bevorzugt entlang einer Fahrzeuglängsachse des Anhängers ausgerichtet. Dies ist auch bei dem einen Erfindungsaspekt und ggf. ohne reversierende Fahrbewegungen günstig.

Für die Massenermittlung ist bei beiden Erfindungsaspekten ein horizontaler oder schwach geneigter Untergrund von Vorteil. Etwaige Neigungen können in Fahrtrichtung jedoch durch die reversierenden Fahrbewegungen und die dabei durchgeführten Ermittlungen bzw. Berechnungen, z.B. durch eine Mittelwertbildung, kompensiert werden.

Vorzugsweise erfolgen die reversierenden Fahrbewegungen in Vorwärtsrichtung (V) und in Rückwärtsrichtung (R) mit einem unmittelbaren Fahrtrichtungswechsel. Dabei schließt an die Fahrbewegung in der einen Richtung direkt eine Fahrbewegung in der Gegenrichtung an. Die reversierenden Fahrbewegungen in Vorwärts- und in Rückwärtsrichtung sowie die Richtungswechsel können jeweils mehrmals erfolgen. In einer vorteilhaften Ausführungsform erfolgen die Fahrbewegungen in Vorwärts- und in Rückwärtsrichtung jeweils viermal, fünfmal oder mehr. Dies bedeutet vier bzw. fünf Fahrbewegungen in Vorwärtsrichtung und vier bzw. fünf Fahrbewegungen in Rückwärtsrichtung. Vorzugsweise erfolgt nach einer Vorwärtsfahrt direkt anschließend eine Rückwärtsfahrt und dann wieder eine Vorwärtsfahrt. Der direkte Wechsel der Fahrtrichtungen hat den Vorteil, dass die Fahrstrecke (x) sehr klein sein kann.

In einer anderen Ausführungsform können mehrere Fahrbewegungen mit gleicher Fahrtrichtung aneinander anschließen und dann erst ein Fahrtwechsel mit einer Fahrbewegung in Gegenrichtung erfolgen. Dies erfordert eine etwas längere Fahrstrecke (x).

Die vom Ermittlungsmodul veranlassten reversierenden Fahrbewegungen erfolgen jeweils aus dem Stillstand. Die Fahrbewegungen können dabei mit Beschleunigung bis zu einer konstanten Fahrt erfolgen. Sie können dann wieder mittels einer steuerbaren Bremseinrichtung beendet werden.

Für die Ermittlung der Anhängermasse werden die Werte der Messwertgeber während der Beschleunigungsphase und ggf. an deren Ende und Übergang in die Konstantfahrt erfasst und verarbeitet. Die Beschleunigungsphase mit bevorzugt maximaler Beschleunigung der Antriebseinheit(en) kann sehr kurz sein und wenige Sekunden betragen. Dementsprechend kurz kann auch die Fahrstrecke (x) sein. Der Platzbedarf des Anhängers und seiner Fahrbewegungen während des Ermittlungsprozesses kann minimiert werden. Die Länge der bevorzugt ebenen Fahrstrecke kann z.B. zwischen 20cm und 1m betragen. Vorzugsweise liegt sie in einem Bereich zwischen 30cm und 50cm.

Das Ermittlungsmodul kann die aufgenommenen Werte der Messwertgeber speichern und zur Ermittlung der Anhängermasse verarbeiten und auswerten. Das Ermittlungsmodul kann dabei mit einer geeigneten Taktfrequenz, von z.B. 100 Hz oder mehr arbeiten. Das Ermittlungsmodul kann auch Vorgabewerte speichern und zur Ermittlung der Anhängermasse verarbeiten, z.B. den dynamischen Rollradius r der Anhängerräder, eine Übersetzung ü sowie einen Wirkungsgrad η der jeweiligen Antriebseinheit oder dgl..

Das Ermittlungsmodul kann die ermittelte Masse (m) des abgekuppelten Anhängers und/oder einen hiervon abgeleiteten anderen Parameter vor Ort oder extern anzeigen und/oder signalisieren. Eine bevorzugt drahtlose Signalisierung kann z.B. an ein Zugfahrzeug oder an eine Zusatzeinrichtung am Anhänger, z.B. eine Schlingerbremse, eine elektrische Achse zur Fahrunterstützung im Gespannbetrieb oder dgl. erfolgen.

Der ermittelte Massenwert kann in unterschiedlicher Weise genutzt werden. Der Bediener kann über den angezeigten Wert oder eine Differenz zu einer Vorgabe die Zulademöglichkeiten und das evtl. Erreichen des zulässigen Gesamtgewichts des Anhängers überprüfen. Die Bremskräfte einer Schlingerbremse können lastabhängig adaptiert werden. Auch die Betriebsbremse des Anhängers kann bedarfsweise dynamisiert werden. Bei einem Zugfahrzeug kann z.B. dessen ESP- Fahrstabilisierungssystem angepasst werden. Weitere Nutzungen sind Zuglast- und Steigungswarnungen, Reifendruckluftwarnungen, Batteriekapazitätswarnungen bei einer elektrischen Achse oder dgl..

Das Ermittlungsmodul und das Ermittlungsverfahren sind dazu ausgebildet, den Ermittlungsprozess automatisch und eigenständig auszuführen. Der Bediener braucht den Ermittlungsprozess nur durch einen Auslöser zu starten. Es bedarf beim Prozessablauf keines manuellen Bedienereingriffs, um die Fahrbewegungen und die Erfassung sowie Verarbeitung der Messwertgeberdaten auszuführen.

Für die Ausgestaltung des Ermittlungsmoduls als Hardwaremodul und/oder Softwaremodul, insbesondere kombiniertes Hard- und Softwaremodul oder reines Softwaremodul, gibt es verschiedene Möglichkeiten. In einer Ausbildung als Softwaremodul, z.B. Computerprogrammprodukt, kann das Softwaremodul z.B. in eine bestehende Steuereinrichtung des Rangiersystems und in deren Steuerprogramm implementiert werden. Dies kann bei der Herstellung des Rangiersystems oder nachträglich geschehen. Eine solche Steuereinrichtung kann anhängerfest oder mobil ausgebildet sein. Eine mobile Steuereinrichtung kann z.B. in einer dedizierten und mobilen Fernbedienung angeordnet sein.

In einer anderen Variante ist es möglich, das Ermittlungsmodul hardwaremäßig als Steuereinrichtung mit einer Steuerungs- und Ermittlungssoftware auszubilden. Dies kann z.B. in Form einer modifizierten mobilen Fernbedienung oder durch Austausch einer fahrzeugfesten oder mobilen Steuereinrichtung geschehen.

In einer Ausführungsform kann ein softwaremäßig ausgebildetes Ermittlungsmodul als App ausgestaltet sein, die auf einen universellen tragbaren Computer, z.B. ein Smartphone, ein Tablet oder dgl., aufgespielt werden kann und dessen Hardware und Software als Steuereinrichtung nutzt. Mit dem universellen tragbaren Computer werden Consumer-Geräte bezeichnet, die für eine Vielzahl unterschiedlicher und beliebiger Einsatzmöglichkeiten konzipiert und nicht dediziert sind. Das Rangiersystem und der Ermittlungsprozess können dabei über den tragbaren Computer gesteuert bzw. ausgelöst werden. Der tragbare Computer und insbesondere dessen Touchscreen kann außerdem zum manuellen Steuern des Rangiersystems, insbesondere für die Fahrtrichtung und die Geschwindigkeit des Anhängers, eingesetzt werden.

Von der App können auf dem Monitor, insbesondere Touchscreen, ein oder mehrere Bedienmittel für eine Steuerung des Rangiersystems und des abgekuppelten Anhängers sowie ggf. eine Anzeige generiert werden. Ein Bedienmittel kann als sensitives Steuerfeld für eine Steuerung der Anhängerbewegungen, insbesondere für die Fahrtrichtung und die Geschwindigkeit des abgekuppelten Anhängers, ausgebildet sein. Das sensitive Steuerfeld kann ein Zentrum und eine umgebende, bevorzugt ringförmige, Sensorfläche aufweisen, mit der Fingerpositionen und ggf. Fingerbewegungen eines Bedieners nach Richtung und Abstand vom Zentrum aufgenommen und zur Steuerung von Fahrtrichtung und Geschwindigkeit des abgekuppelten Anhängers ausgewertet werden können. Diese Ausgestaltung der App und des Rangiersystems haben eigenständige erfinderische Bedeutung und können auch ohne die Ermittlungstechnik für die Anhängermasse genutzt werden.

Das mit dem Ermittlungsmodul auszurüstende oder ausgerüstete Rangierantriebssystem kann in unterschiedlicher Weise ausgebildet sein. Das Rangierantriebssystem dient zum Rangieren des abgekuppelten Anhängers, z.B. beim Parken und beim Ankuppeln an ein Zugfahrzeug. Beim Rangieren können durch individuelles Antreiben der Anhängerräder beliebige Richtungen und Kurven mit wählbaren Radien gefahren werden sowie auf der Stelle gedreht werden. Das Rangierantriebssystem kann zusätzliche Funktionen haben, z.B. zur beschleunigenden und bremsenden Fahrtunterstützung sowie zur Fahrstabilisierung im Gespannbetrieb.

Das Rangierantriebssystem kann eine oder mehrere Antriebseinheiten aufweisen, welche die beidseitigen Anhängerräder individuell und steuerbar antreiben. Die Antriebseinheiten weisen ein Antriebsmittel und ein mit dem zugeordneten Anhängerrad verbindbares oder verbundenes Treibmittel auf. Das Antriebsmittel und das Treibmittel können einen Antriebsstrang bilden. Besonders günstig ist eine Ausbildung des Antriebsmittels als Elektromotor, z.B. als Gleichstrommotor, insbesondere bürstenbehafteter oder bürstenloser Gleichstrommotor, als Wechselstrommotor, insbesondere Asynchron- oder Synchronmotor, oder dgl.. Alternative Motorausbildungen z.B. als hydraulischer Motor etc. sind möglich.

Für die Ausbildung der Antriebseinheiten und ihrer Antriebsmittel und Treibmittel gibt es unterschiedliche Möglichkeiten.

In einer Variante kann die Antriebseinheit als Mover mit einer rotierend angetriebenen und an ein Anhängerrad bevorzugt umfangsseitig zustellbaren Treibrolle sowie ggf. mit einem Getriebe ausgebildet sein. Ein solcher Mover kann z.B. an einem Längsträger des Anhängers in der Nähe zum beaufschlagten Anhängerrad montiert sein. Eine direkte Montage am aufrechten Längssteg eines solchen Längsträgers ist besonders vorteilhaft. Der bevorzugt eingesetzte Elektromotor kann z.B. als Gleichstrommotor ausgebildet sein. Die in den Ansprüchen angegebenen Berechnungsformeln für die Ermittlung der Anhängermasse (m) sind besonders für einen solchen Mover einsetzbar.

In einer anderen Variante kann die Antriebseinheit als integrierter Rangierantrieb ausgebildet sein, bei dem das Antriebsmittel in oder an einem Achskörper einer Achsanordnung des Anhängers montiert werden kann. Auch hierfür ist eine Ausbildung des Elektromotors als Gleichstrommotor von Vorteil.

In einer anderen Ausführung kann die Antriebseinheit als Radnabenmotor ausgestaltet sein. Der bevorzugt eingesetzte Elektromotor kann ein Gleichstrommotor oder ein anderer Elektromotor oder sonstiger Motor sein. Ein Radnabenmotor ermöglicht außerdem andere Einsatzbereiche des Rangierantriebssystems. Es kann z.B. zur Fahrunterstützung im Gespannbetrieb eingesetzt werden, wobei es zur Entlastung des Zugfahrzeugs den Anhänger bedarfsweise aktiv antreibt oder ggf. rekuperativ bremst. Die bevorzugt mehreren und elektrischen Radnabenmotoren können für den erweiterten Einsatzbereich entsprechend angepasst und z.B. als Wechselstrommotoren ausgebildet sein.

In einer weiteren Variante kann die Antriebseinheit als ggfs. rekuperationsfähige elektrische Achse ausgebildet sein, welche eine oder mehrere Elektromotoren, insbesondere Wechselstrommotoren, mit Treibwelle zum direkten Antrieb der Anhängerräder aufweisen. In der Ausführung als Radnabenmotoren oder elektrische Achse können die Elektromotoren in einen Generatorbetrieb zum generatorischen und ggf. rekuperativen Bremsen umgeschaltet werden. Alternativ kann ein separater Generator zugeschaltet werden.

Die Anordnung einer steuerbaren Bremseinrichtung an der jeweiligen Antriebseinheit hat verschiedene Vorteile. Einerseits kann beim Ermittlungsprozess die Fahrbewegung bzw. die Antriebsbewegung gezielt gestoppt werden. Andererseits bildet die steuerbare Bremseinrichtung eine Sicherung gegen unbeabsichtigtes Wegrollen des Anhängers. Die steuerbare Bremseinrichtung kann als elektrische Motorbremse, als steuerbare mechanische Bremse oder in anderer geeigneter Weise ausgebildet sein.

In den Unteransprüchen sind weitere vorteilhafte Ausgestaltungen der Erfindung angegeben.

Die beanspruchte Ermittlungstechnik kann folgende weiteren Ausgestaltungen umfassen, die einzeln oder in Kombination benutzt werden können.

Das Ermittlungsmodul und das Ermittlungsverfahren können dazu ausgebildet sein, das Rangierantriebssystem derart zu steuern, dass es den abgekuppelten Anhänger mit reversierenden Fahrbewegungen über eine Fahrstrecke (x) in Vorwärtsrichtung (V) und in Rückwärtsrichtung (R) bewegt, wobei das Ermittlungsmodul bei diesen Fahrbewegungen jeweils die Messwerte der Messwertgeber aufnimmt und daraus die Masse (m) des abgekuppelten Anhängers berechnet.

Das Ermittlungsmodul kann das Rangierantriebssystem derart ansteuern, dass die einzelne Fahrbewegung oder die reversierenden Fahrbewegungen und die Fahrstrecke (x) gerade und bevorzugt entlang einer Anhängerlängsachse ausgerichtet sind.

Das Ermittlungsmodul kann das Rangierantriebssystem derart ansteuern, dass die einzelne Fahrbewegung oder die reversierenden Fahrbewegungen jeweils aus dem Stillstand des abgekuppelten Anhängers erfolgen

Das Ermittlungsmodul kann das Rangierantriebssystem derart ansteuern, dass die reversierenden Fahrbewegungen in Vorwärtsrichtung (V) und in Rückwärtsrichtung (R) mit einem unmittelbaren Fahrtrichtungswechsel erfolgen.

Das Ermittlungsmodul kann das Rangierantriebssystem derart ansteuern, dass die reversierenden Fahrbewegungen in Vorwärtsrichtung (V) und in Rückwärtsrichtung (R) jeweils mehrmals, z.B. viermal, fünfmal oder mehr, erfolgen. Dies gilt auch für Fahrbewegungen mit nur einer Fahrtrichtung.

Das Ermittlungsmodul und das Ermittlungsverfahren können dazu ausgebildet sein, einen aus der ermittelten Masse (m) des Anhängers abgeleiteten anderen Parameter anzuzeigen und/oder zu signalisieren, insbesondere eine Masse-Differenz zu einem Vorgabewert, einen Reifendruckhinweis oder dgl..

Das Ermittlungsmodul und das Ermittlungsverfahren können dazu ausgebildet sein, die Masse (m) des abgekuppelten Anhängers unter einer Mittelwertsbildung zu berechnen.

Das Ermittlungsmodul kann als Hardwaremodul mit einer anhängerfesten oder mobilen Steuereinrichtung mit einem Softwaremodul ausgebildet sein.

Das Ermittlungsmodul kann als Softwaremodul für eine anhängerfeste oder mobile Steuereinrichtung ausgebildet sein.

Die Steuereinrichtung des Hardwaremoduls und/oder des Softwaremoduls kann eine Recheneinheit, Speicher für ein Programm und/oder für Daten und/oder für Vorgabewerte sowie I/O-Schnittstellen umfassen.

Das Ermittlungsmodul kann in einer mobilen, insbesondere tragbaren, Fernbedienung des Rangiersystems anordenbar oder angeordnet sein.

Die Fernbedienung kann als dediziertes Gerät oder als universeller tragbarer Computer, insbesondere Smartphone, Tablet oder dgl., ausgebildet sein.

Die Fernbedienung kann Bedienmittel für ein Auslösen des Ermittlungsprozesses aufweisen.

Die Fernbedienung kann Bedienmittel für eine manuelle Steuerung des Rangiersystems, insbesondere für die Fahrtrichtung und die Geschwindigkeit des Anhängers, aufweisen.

Das Ermittlungsmodul kann als App für einen universellen tragbaren Computer, insbesondere ein Smartphone, ein Tablet oder dgl., ausgebildet sein.

Das Ermittlungsmodul und das Ermittlungsverfahren können dazu ausgebildet sein, auf einem Monitor, insbesondere einem Touchscreen, der Fernbedienung eine Anzeige und/oder ein oder mehrere Bedienmittel zu generieren.

Ein ggf. generiertes Bedienmittel kann als Auslöser für den Ermittlungsprozess ausgebildet sein.

Ein Bedienmittel kann als sensitives Steuerfeld für eine Steuerung des Rangiersystems und der Anhängerbewegungen, insbesondere für die Fahrtrichtung und die Geschwindigkeit des abgekuppelten Anhängers, ausgebildet sein.

Das beanspruchte Rangierantriebssystem kann mehrere Antriebseinheiten aufweisen, die jeweils eines der beidseitigen Anhängerräder antreiben.

Die Antriebseinheit(en) des Rangiersystems kann/können ein Antriebsmittel und ein mit dem zugeordneten Anhängerrad verbindbares oder verbundenes Treibmittel aufweisen.

Das Antriebsmittel und das Treibmittel können einen Antriebsstrang bilden.

Das Antriebsmittel kann als Elektromotor ausgebildet sein.

Das Treibmittel kann eine rotierend angetriebene und an ein Anhängerrad bevorzugt umfangseitig zustellbare Treibrolle sowie ggf. ein Getriebe aufweisen.

Das Treibmittel kann eine rotierend angetriebene und mit einer Achse eines Anhängerrads gekoppelte Treibwelle sowie ggf. ein Getriebe aufweisen.

Die jeweilige Antriebseinheit kann mit einem Antriebsmittel, insbesondere einem Elektromotor, bevorzugt Gleichstrommotor, und einer ggf. zustellbaren Treibrolle als Mover und zur Montage an einem Längsträger des Anhängers ausgebildet sein.

Die jeweilige Antriebseinheit kann mit einem Antriebsmittel, insbesondere einem Elektromotor, und einer Treibwelle als integrierter Rangierantrieb ausgebildet ist, wobei das Antriebsmittel zur Montage in oder an einem Achskörper einer Achsanordnung des Anhängers ausgebildet sein kann.

Die jeweilige Antriebseinheit kann mit einem Antriebsmittel, insbesondere einem Elektromotor, und einer Treibwelle als Radnabenmotor ausgebildet sein.

Die jeweilige Antriebseinheit kann mit einem Antriebsmittel, insbesondere einem Elektromotor, und einer Treibwelle als als ggf. rekuperationsfähige elektrische Achse ausgebildet sein.

Die jeweilige Antriebseinheit kann eine steuerbare Bremseinrichtung aufweisen.

Ein oder mehrere Messwertgeber können an einer Antriebseinheit oder extern angeordnet sein.

Ein Messwertgeber für ein Äquivalent des Antriebsmoments kann einen elektrischen Motorstromgeber einer Antriebseinheit umfassen.

Ein Messwertgeber für ein Äquivalent der Antriebsbeschleunigung kann ein Geberteil für eine Antriebsgeschwindigkeit oder eine Antriebsdrehzahl einer Antriebseinheit und ein Geberteil für die Zeit umfassen.

Das Rangierantriebssystem kann eine anhängerfeste oder eine mobile Steuereinrichtung mit einem Ermittlungsmodul umfassen.

Die Steuereinrichtung kann eine Recheneinheit, Speicher für ein Programm und/oder für Daten und/oder für Vorgabewerte und I/O-Schnittstellen aufweisen.

Die Steuereinrichtung kann ein bevorzugt drahtloses Kommunikationsmittel aufweisen.

Das Rangierantriebssystem kann eine Anzeige aufweisen.

Das Rangierantriebssystem kann eine mobile, insbesondere tragbare Fernbedienung aufweisen.

In der Fernbedienung kann eine mobile Steuereinrichtung angeordnet sein.

Die mobile, insbesondere tragbare Fernbedienung kann als dediziertes Gerät oder als universeller tragbarer Computer, insbesondere Smartphone, Tablet oder dgl., ausgebildet sein.

Die Fernbedienung kann Bedienmittel für ein Auslösen des Ermittlungsprozesses und/oder für eine Steuerung des Rangiersystems, insbesondere für die Fahrtrichtung und die Geschwindigkeit des Anhängers, aufweisen.

Ein Bedienmittel der Fernbedienung kann als sensitives Steuerfeld für eine Steuerung der Anhängerbewegungen, insbesondere für die Fahrtrichtung und die Geschwindigkeit des abgekuppelten Anhängers, ausgebildet sein.

Das sensitive Steuerfeld kann ein Zentrum und eine umgebende, bevorzugt ringförmige, Sensorfläche aufweisen, mit der Fingerpositionen und ggf. Fingerbewegungen eines Bedieners nach Richtung und Abstand vom Zentrum aufgenommen und zur Steuerung von Fahrtrichtung und Geschwindigkeit des abgekuppelten Anhängers ausgewertet werden können.

Die Erfindung ist in den Zeichnungen beispielhaft und schematisch dargestellt. Im Einzelnen zeigen:

Figur 1: Einen Anhänger mit einem Rangierantriebssystem und einem Ermittlungsmodul für die Anhängermasse in einer schematischen Darstellung und einer Seitenansicht,

Figur 2: eine Draufsicht auf die Anordnung von Figur 1,

Figur 3: einen Anhänger mit einem Rangiersystem und einem Moover als Antriebseinheit in einer Seitenansicht,

Figur 4: eine Draufsicht auf den Anhänger von Figur 3,

Figur 5: einen Anhänger mit einer Variante des Rangierantriebssystems und einem integrierten Rangierantrieb in einer Draufsicht,

Figur 6: eine perspektivische Ansicht des integrierten Rangierantriebs,

Figur 7: einen Anhänger mit einem Rangierantriebssystem und einer elektrischen Achse in Draufsicht,

Figur 8: eine Fernbedienung des Rangiersystems mit einem Ermittlungsmodul und

Figur 9: ein Diagramm für den Verlauf von Motorstrom und Motordrehzahl über der Zeit beim Ermittlungsprozess.

Die Erfindung betrifft ein Ermittlungsmodul (1) und ein Ermittlungsverfahren zur Ermittlung der Masse (m) eines abgekuppelten Anhängers (3) mit einem Rangiersystem (2). Die Erfindung betrifft ferner das Rangiersystem (2) mit einem Ermittlungsmodul (1) sowie einen Anhänger (3) mit einem Rangierantriebssystem (2) und mit einem Ermittlungsmodul (1).

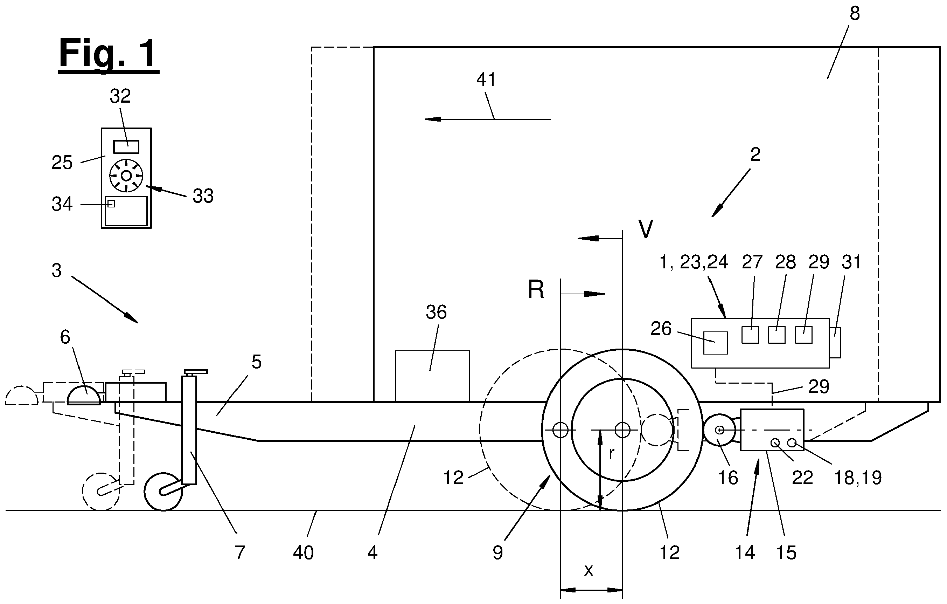

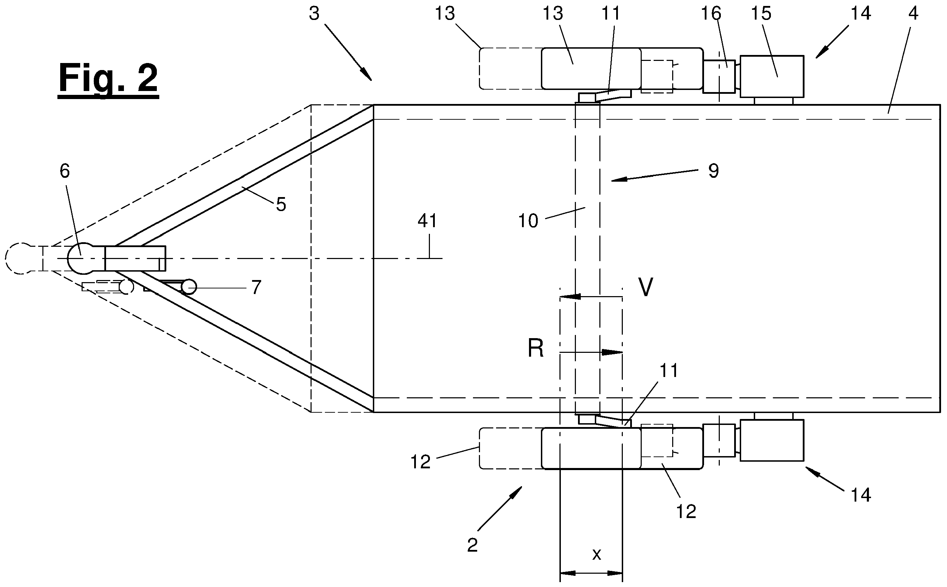

Figur 1 und 2 zeigen einen abgekuppelten und abgestellten Anhänger (3) mit einem Rangiersystem (2) und mit einem Ermittlungsmodul (1) zur Ermittlung der Masse (m) des abgekuppelten und abgestellten Anhängers (3).

Der Anhänger (3) weist ein Chassis (4) mit einer Anhängerlängsachse (41) und mit einer frontseitigen und bevorzugt starren Deichsel (5) auf. Am vorderen Ende der Deichsel (5) ist eine Anhängerkupplung (6) zum Ankuppeln an ein Zugfahrzeug vorhanden. Die Anhängerkupplung (6) ist bevorzugt als Kugelkopfkupplung ausgebildet. Am Chassis (4) ist eine Achsanordnung (9) mit beidseitig am Anhänger (3) angeordneten Anhängerädern (12,13) angeordnet. Die Achsanordnung (9) kann eine oder mehrere Achsen umfassen. Im gezeigten Ausführungsbeispiel weist sie eine einzelne Achse auf. Die jeweilige Achse kann z.B. als Radlenkerachse ausgebildet sein. Sie kann einen quer zum Chassis (4) erstreckten Achskörper (10) mit endseitigen Radlenkern (11) und dort gelagerten Anhängerädern (12,13) aufweisen. Alternativ sind andere Achsausbildungen möglich.

Der Anhänger (3) weist einen Aufbau (8) auf, der auf dem Chassis (4) angeordnet ist und in beliebiger Weise ausgebildet sein kann. Der Anhänger (3) kann ferner eine Energieversorgung (36) umfassen, z.B. eine wiederaufladbare elektrische Batterie. Am Anhänger (3), z.B. an der Deichsel (5) oder an anderer geeigneter Stelle, kann ein gleit- oder rollfähiges Stützmittel (7) angeordnet sein. Dieses ist z.B. als Stützrad gestaltet.

Das Rangiersystem (2) umfasst bevorzugt mehrere, z.B. zwei, Antriebseinheiten (14), die jeweils ein zugeordnetes Anhängerad (12,13) individuell antreiben. Die Antriebseinheiten (14) bestehen jeweils aus einem Antriebsmittel (15) und einem hiervon beaufschlagten Treibmittel (16), welches das jeweils zugeordnete Anhängerad (12,13) antreibt. Das Antriebsmittel (15) und das zugeordnete Treibmittel (16) bilden einen Antriebsstrang (17).

Für die Ausgestaltung der Antriebseinheiten (14) gibt es verschiedene nachfolgend beschriebene Ausführungsbeispiele. Die Zahl der Antriebseinheiten (14) kann variieren. Sie kann auch von der Zahl der Achsen abhängen. Wenn die Achsanordnung (12) in einer nicht dargestellten Variante zwei oder mehr Achsen aufweist und z.B. als Tandemachse oder Tripelachse ausgebildet ist, können mehr als zwei Antriebseinheiten (14), z.B. vier Antriebseinheiten (14) beidseitig am Anhänger (3) vorgesehen sein.

In der schematisch dargestellten Ausführung von Figur 1 und 2 sind z.B. die zwei Antriebseinheiten (14) als Mover ausgestaltet. Das Antriebsmittel (15) ist als bevorzugt elektrischer Antriebsmotor, insbesondere Gleichstrommotor, ausgebildet und wird von der Energieversorgung (36) gespeist. Das Treibmittel (16) weist eine vom Antriebsmotor rotierend angetriebene Treibrolle auf, die mittels einer nicht dargestellten Zustelleinrichtung umfangsseitig an das zugeordnete Anhängerad (12,13) zugestellt und unter Anpressdruck in treibenden Kontakt gebracht werden kann. Der Angriff erfolgt z.B.

an der Lauffläche des betreffenden Anhängerads (12,13).

In einer anderen und nicht dargestellten Ausführungsform kann die Treibrolle als Zahnrad ausgebildet sein und kann mit einem am Fahrzeugrad (12,13) angeordneten Gegen-Zahnrad umfangsseitig in Eingriff gebracht werden. Das Treibmittel (16) kann ferner ein Getriebe umfassen.

Die Antriebseinheiten (14) weisen jeweils eine steuerbare Bremseinrichtung (22) auf. Dies kann z.B. eine elektrische Motorbremse und/oder eine steuerbare mechanische Bremse, z.B. eine Reibbremse oder eine Magnetbremse, sein.

Das Rangierantriebssystem (2), z.B. die jeweilige Antriebseinheit (14), weist einen Messwertgeber (18) für das Antriebsmoment der Antriebseinheit (14) auf. Der Messwertgeber (18) kann das Antriebsmoment direkt erfassen und kann z.B. als Drehmomentengeber ausgebildet sein. In einer anderen Ausführungsform kann der Messwertgeber (18) den elektrischen Motorstrom (I) eines elektromotorischen Antriebsmittels (15) als Äquivalent zum Antriebsmoment aufnehmen. Das Antriebsmoment ergibt sich dann aus dem Motorstrom (I) und der bekannten Drehmomentenkennlinie.

Das Rangierantriebssystem (2), z.B. die Antriebseinheit (14), weist ferner einen Messwertgeber (19) für die Beschleunigung des Fahrzeugs (3) und/oder des Hilfsantriebs (14) auf. Der Messwertgeber (19) kann z.B. als Beschleunigungssensor ausgebildet sein. Der Messwertgeber (19) kann andererseits die Drehzahl (d) oder die Geschwindigkeit der Antriebseinheit (14), insbesondere des Antriebsmittels (15), über der Zeit (t) erfassen und dies als Äquivalent zur Beschleunigung ausgeben.

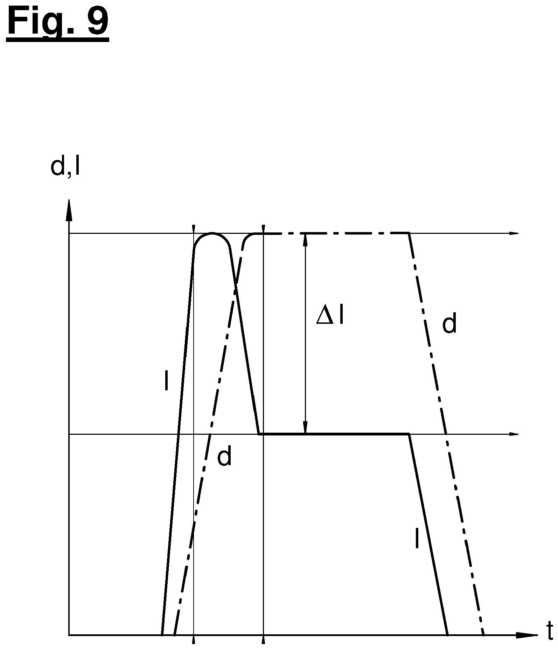

Figur 9 zeigt beispielhaft ein Diagramm zum Verlauf von Motorstrom (I) und Drehzahl (d) über der Zeit (t). Der Motorstromverlauf ist mit durchgezogener Linie und der Drehzahlverlauf strichpunktiert dargestellt. Ferner sind die Erfassungsbereiche markiert.

Das Rangierantriebssystem (2) kann eine Steuereinheit (24) zur Steuerung der Antriebseinheit(en) (14) aufweisen. Dies kann eine separate und zentrale Steuereinheit (24) sein, die mit Motorsteuerungen der Antriebseinheiten (14) in Verbindung steht. Alternativ kann eine der Motorsteuerungen als Master und als Steuereinheit (24) ausgebildet sein.

Das Rangierantriebssystem (2) umfasst ferner eine mobile und bevorzugt tragbare Fernbedienung (25). Diese weist Bedienmittel (33) zur Bedienung und Steuerung des Rangierantriebssystems (2) und ggf. eine Anzeige (32) auf. Die Bedienmittel (33) können z.B. als Joystick und Tasten ausgebildet sein. Der Joystick kann zum Lenken des Anhängers (3) eingesetzt werden. Die Fernbedienung (25) kommuniziert z.B. drahtlos und bidirektional mit der Steuereinheit (24). Figur 1 zeigt eine solche Fernbedienung (25). Diese ist z.B. als dediziertes Gerät ausgebildet, welches speziell für das Rangiersystem (2) vorgesehen und ausgebildet ist.

Das Rangierantriebssystem (2) ist mit einem Ermittlungsmodul (1) signaltechnisch und steuertechnisch über eine Steuer- und Signalverbindung (30) verbindbar oder verbunden. Das Ermittlungsmodul (1) kann Daten der Messwertgeber (18,19) empfangen und kann das Rangiersystem (2) und dessen Antriebseinheiten (14) steuern. Das Ermittlungsmodul (1) kann für die Massenermittlung Berechnungsvorgänge durchführen. Es kann ggfs. auch die Messdaten und andere Daten speichern. Das Ermittlungsmodul (1) kann den Ermittlungsprozess sowie die Steuer- und Berechnungsvorgänge eigenständig, automatisch und programmgesteuert durchführen. Das Ermittlungsmodul (1) und der Ermittlungsprozess können von einem Bediener durch einen Auslöser (34) an geeigneter Stelle, z.B. an der Fernbedienung (25), gestartet werden.

Das Ermittlungsmodul (1) kann als Hardwaremodul und/oder als Softwaremodul ausgebildet sein.

Figur 1 und 2 zeigen eine Ausführung als Hardware- und Softwaremodul. Das Ermittlungsmodul (1) weist als Hardwaremodul eine Steuereinrichtung (23) auf. Diese kann eigenständig am Anhänger (3) angeordnet werden oder angeordnet sein oder kann wie in Figur 1 an der Steuereinheit (24) angeordnet sein. Das Softwaremodul ist z.B. in Form eines Computerprogrammprodukts im Hardwaremodul implementiert und ablauffähig gespeichert. Das Computerprogrammprodukt kann Kommunikations-, Steuer- und Berechnungsprogramme enthalten.

In einer anderen Ausführung kann das Ermittlungsmodul (1) nur als Softwaremodul, z.B. als besagtes Computerprogrammprodukt, ausgebildet und in eine bereits vorhanden Hardware, z.B. in die Steuereinheit (24), implementiert werden. Ein eigenes Hardwaremodul ist dann entbehrlich.

Die in Figur 1 gezeigte Steuereinrichtung (23) des Ermittlungsmoduls (1) umfasst eine Recheneinheit (26) und Speicher (27,28,29) für Programme und für Daten, z.B. die aufgenommenen Messwerte der Messwertgeber (18,19), für Zwischenwerte bei der Berechnung und Auswertung und für eventuelle Vorgabewerte. Solche Vorgabewerte können z.B. den dynamischen Radius (r) der Anhängerräder (12,13), die Übersetzung (ü) des Antriebsstrangs (17) einer jeweiligen Antriebseinheit (14) und den Wirkungsgrad ($\eta$) einer jeweiligen Antriebseinheit (14) betreffen.

Die Recheneinheit (26) kann Rechenoperationen zur Verarbeitung und Auswertung der Messwerte und anderer Daten und zur Berechnung der Masse (m) des Anhängers (3) ausführen. Das besagte Computerprogrammprodukt des Ermittlungsmoduls (1) ist in die Steuereinrichtung (23) implementiert und ist z.B. im Programmspeicher (27) gespeichert. Die Recheneinheit (26) ist mit den Speicher (27,28,29) sowie mit I/O-Schnittstellen und mit der Steuer- und Signalverbindung (30) gekoppelt.

Die Steuereinrichtung (23) kann ein Kommunikationsmittel (31) für den bevorzugt bidirektionalen Datenaustausch aufweisen. Die Kommunikation kann leitungsgebunden oder drahtlos erfolgen. Das Kommunikationsmittel (31) kann auch an der Steuereinheit (24) angeordnet sein. Bei der in Figur 1 und 2 gezeigten Anordnung des Ermittlungsmoduls (1) an der anhängerfesten Steuereinheit (24) kann die Kommunikation leitungsgebunden, z.B. durch ein Bussystem, erfolgen.

Die Fernbedienung (25), insbesondere die Anzeige (32) und der Auslöser (34), sind mit dem Ermittlungsmodul (1) in geeigneter Weise verbunden, z.B. drahtlos per Funk, Infrarot oder auf andere Weise. Mit dem Auslöser (34) kann ein Bediener das Ermittlungsmodul (1) und dessen Ermittlungsprozess starten. An der Anzeige (32) kann das Ermittlungsmodul (1) den ermittelten Wert der Masse (m) des Anhängers (3) und/oder eventuell andere Informationen anzeigen.

Das Ermittlungsmodul (1) steuert bei dem bevorzugt automatisch ausgeführten Ermittlungsprozess das Rangiersystem (2) derart, dass das Rangiersystem (2) mit den Antriebseinheiten (14) den abgekuppelten Anhänger (3) antreibt und mit einer Fahrbewegung über eine Fahrstrecke (x) auf einem bevorzugt ebenen Untergrund (40) bewegt. Der Untergrund (40) ist bevorzugt horizontal ausgerichtet.

In einer bevorzugten Ausführungsform beschleunigen die Antriebseinheit(en) (14) bei der Fahrbewegung maximal und gehen am Ende der Beschleunigungsphase bei maximaler Drehzahl in eine Konstantfahrt über, die dann durch ein Abbremsen zum Stillstand beendet wird. Die Fahrbewegung kann einzeln und nur in einer Richtung, z.B. in Vorwärtsrichtung (V), über eine Fahrstrecke (x) mit einer Länge von z.B. ca. 30 cm ausgeführt werden. Sie kann aus dem Stillstand des abgekuppelten Anhängers (3) ausgeführt werden. Mit der steuerbaren Bremseinrichtung (22) kann der Anhänger (3) am Ende der Fahrbewegung gestoppt werden. Die Fahrbewegung und die Fahrstrecke (x) sind gerade und erstrecken sich entlang der Längsachse (41) des Anhängers (3) .

In einer Ausführungsform werden reversierende Fahrbewegungen über die Fahrstrecke (x) in Vorwärtsrichtung (V) und auch in Rückwärtsrichtung (R) ausgeführt. Figur 1 und 2 zeigen diese Fahrtrichtungen (V,R) und die Fahrzeugstellungen an den Enden des Fahrtwegs (x) mit durchgezogenen und gestrichelten Linien.

Die reversierenden Fahrbewegungen sind entgegengesetzt gerichtet und sind entlang der gleichen Fahrstrecke (x) ausgerichtet. Die reversierenden Fahrbewegungen und die Fahrstrecke (x) sind gerade und erstrecken sich entlang der Längsachse (41) des Anhängers (3). Die reversierenden Fahrbewegungen werden jeweils aus dem Stillstand des abgekuppelten Anhängers (3) ausgeführt. Mit der steuerbaren Bremseinrichtung (22) kann der Anhänger (3) am Ende der jeweiligen Fahrbewegung gestoppt werden. Die reversierenden Fahrbewegungen werden jeweils aus dem Stillstand mit einer bevorzugt maximalen Beschleunigung bis zu einer konstanten Fahrt durchgeführt und dann gestoppt. Die Länge der Fahrstrecke (x) beträgt im gezeigten Ausführungsbeispiel circa 30 cm.

Das Ermittlungsmodul (1) steuert das Rangierantriebssystem (2) z.B. derart, dass die reversierenden Fahrbewegungen in Vorwärtsrichtung (V) und in Rückwärtsrichtung (R) mit einem unmittelbaren Fahrtrichtungswechsel erfolgen. An eine Fahrbewegung in Vorwärtsrichtung schließt sich nach dem Stillstand unmittelbar eine entgegengesetzte Fahrbewegung in Rückwärtsrichtung an. Die erste Fahrbewegung kann wahlweise in Vorwärts- oder Rückwärtsrichtung erfolgen.

Die reversierenden Fahrbewegungen in Vorwärts- und Rückwärtsrichtung (V,R) erfolgen jeweils mehrmals, z.B. viermal oder fünfmal. Hierbei werden in der bevorzugten Ausführungsform vier oder fünf Fahrbewegungen vorwärts und vier oder fünf Fahrbewegungen rückwärts mit jeweils unmittelbaren Fahrtrichtungswechseln ausgeführt.

Während der Fahrbewegungen in Vorwärts- und ggf. Rückwärtsrichtung nimmt das Ermittlungsmodul (1) die Daten der Messwertgeber (18,19) auf und speichert diese in einem Datenspeicher (28). Das Antriebsmoment und die Beschleunigung bzw. deren Äquivalente werden während der Beschleunigungsphase der Antriebseinheiten (14) in Vorwärtsrichtung und ggf. in Rückwärtsrichtung aufgenommen und verarbeitet. Die Massenermittlung kann für jede Fahrbewegung einzeln durchgeführt und der ermittelte Massewert gespeichert werden. Aus den gespeicherten Massewerten, z.B. acht oder zehn Massewerten, kann dann ein Mittelwert der Masse (m) gebildet werden. Alternativ sind andere Berechnungsmethoden möglich, z.B. antriebsbezogene Speicherung aller Messwerte während der Fahrbewegungen und eine summarische Datenverarbeitung sowie Massenermittlung am Ende des Prozesses.

Das Ermittlungsmodul (1) kann z.B. die Masse (m) des abgekuppelten Anhängers (3) auf Basis der Kräftegleichung $F = m*a$ mit Momentenumrechnung und nach einer Formel

$$m = M_{ges} / r*a_g$$

berechnen. Hierbei ist Mges das gesamte wirksame Antriebsmoment aller beteiligter Antriebseinheiten (14), r ist der dynamische Rollradius des Anhängerrads (12,13) und ag ist die ggf. gemittelte Antriebsbeschleunigung der beteiligten Antriebseinheiten (14).

Das Ermittlungsmodul (1) kann das gesamte wirksame Antriebsmoment Mges aus der Summe der jeweiligen Antriebsmomente Mn der beteiligten Antriebseinheiten (14) nach den Formeln

$$M_{ges} = \sum M_n$$

und

$$M_n = MM_n * ü_n * \eta_n$$

berechnen, wobei MMn das Motormoment der jeweiligen Antriebseinheit (14), ün die Übersetzung eines jeweiligen Antriebsstrangs und $\eta_n$ der Wirkungsgrad der jeweiligen Antriebseinheit (14) ist.

Bei dem vorstehenden Berechnungsbeispiel werden die drehenden Massen und der Temperatureinfluss vernachlässigt. Alternativ können Korrekturwerte, insbesondere für den Temperatureinfluss, aufgenommen werden. Der Wirkungsgrad $\eta_n$ kann über eine vorherige Kalibrierung der Antriebseinheit (14) erfasst werden. Die Übersetzung ün und der Wirkungsgrad $\eta_n$ können als Vorgabewerte vom Entwicklungsmodul (1) gespeichert werden.

Die Beschleunigung bzw. der Anstieg der Drehzahl (d) über der Zeit ist üblicherweise im Wesentlichen linear. Bei einer Momentenerfassung über den elektrischen Motorstrom (I) kann z.B. der Elektromotor mit einem vorgegebenen Strom, z.B. Konstantstrom, betrieben und der Vorgabewert zur Berechnung des Antriebsmoments herangezogen werden.

In einer anderen Variante bei veränderlichem Motorstrom (I) kann z.B. die Differenz $\Delta I$ zwischen einer Stromspitze am Ende der Beschleunigungsphase und dem abgefallenen Stromwert bei Konstantfahrt für die Berechnung des Antriebsmoments für die Anhängerbeschleunigung und die Ermittlung der Masse (m) genutzt werden. In diesem Bereich dient das Moment vornehmlich zur Beschleunigung des abgekuppelten Anhängers (3). Das Diagramm von Figur 9 zeigt diesen Sachverhalt für eine Antriebseinheit (14) mit einem Gleichstrommotor. Das Antriebsmoment berechnet sich aus $\Delta I$ und der bekannten Momentenkennlinie. Der Anstieg der Drehzahl (d) in der Beschleunigungsphase repräsentiert die Beschleunigung (a) des abgekuppelten Anhängers (3).

Die Antriebseinheit (14) wird aus dem Stillstand maximal beschleunigt bis zum Erreichen der maximalen Drehzahl (d) und dreht dann konstant mit maximaler Drehzahl (d) in einer an die Beschleunigungsphase anschließenden Konstantfahrt weiter. Der Motorstrom (I) steigt bis zu einem Maximum am Ende der Beschleunigungsphase an und fällt beim Übergang in die Konstantfahrt ab. Die Antriebseinheit (14) und der Anhänger (3) werden dann durch die steuerbare Bremseinrichtung (22) wieder zum Stillstand abgebremst.

Der ermittelte Wert, insbesondere Mittelwert, der Masse (m) kann vom Ermittlungsmodul (1) an einer Anzeige (32) optisch und/oder akustisch oder in anderer Weise dem Bediener angezeigt werden, z.B. an der Fernbedienung (25) oder an anderer Stelle, z.B. am Armaturenbrett im Zugfahrzeug.

Aus der ermittelten Masse (m) des Anhängers (3) kann auch ein anderer Parameter abgeleitet und angezeigt und/oder signalisiert werden. Der besagte ermittelte Wert der Masse (m) kann z.B. in Relation zu einer Vorgabe, z.B. einem zulässigen Gesamtgewicht, gebracht und ggf. mit der Relation und evtl. einer Warnung angezeigt werden. Aus dem ermittelten Wert der Masse (m) kann auch ein erforderlicher Reifendruck der Anhängerräder (12,13) abgeleitet und mit dem tatsächlichen Reifendruck verglichen werden, der z.B. von Druckmessventilen übermittelt wird. Aus dem Vergleich kann bedarfsweise eine Warnung für den Bediener oder auch der erforderliche Reifendruck angezeigt werden. Die Ableitung und der Vergleich können vom Ermittlungsmodul (1) vorgenommen werden, das ggf. auch ein Warnsignal veranlasst.

Der ermittelte Wert, insbesondere Mittelwert, der Masse (m) kann ferner an einen Empfänger signalisiert werden, der die Daten für eigene Zwecke verarbeitet. Dies kann z.B. eine ESP-Steuerung des Zugfahrzeugs, eine dynamische und lastabhängige Betriebsbremse des Anhängers (3) oder eine nachfolgend erläuterte Schlingerbremse (37) des Anhängers (3) oder dgl. sein.

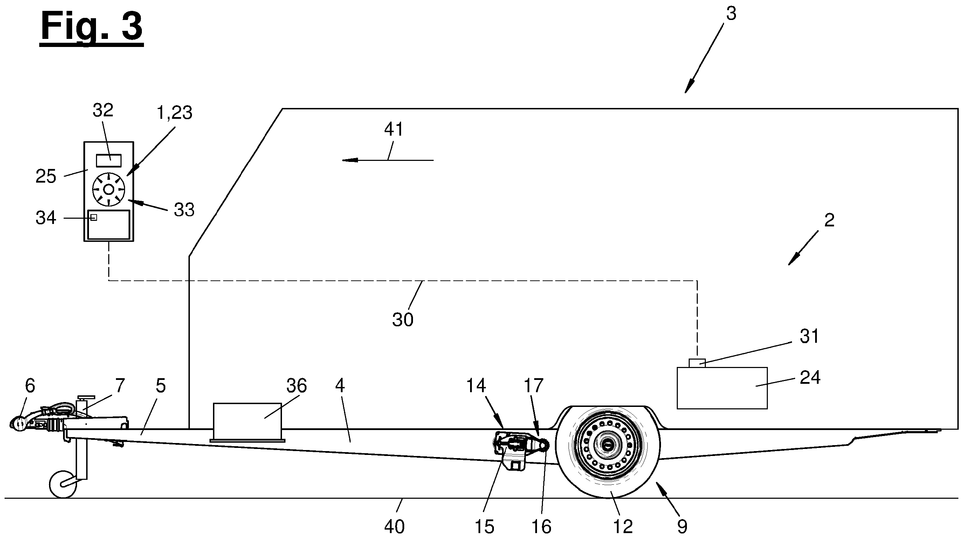

Figur 3 zeigt eine Variante in der Ausbildung und Anordnung des Ermittlungsmoduls (1). Das Ermittlungsmodul (1) ist hierbei in oder an der Fernbedienung (25) angeordnet und steht über eine Steuer- und Signalverbindung (30) mit einer Steuereinheit (24) des Anhängers in Verbindung. Kommunikationsmittel (31) an der Steuereinheit (24) und an der Fernbedienung (25) können dabei z.B. eine drahtlose Kommunikationsverbindung aufbauen. Das Ermittlungsmodul kann bei Figur 3 ebenfalls als Hardwaremodul und/oder Softwaremodul ausgebildet sein. Das Hardwaremodul kann z.B. von der Steuereinrichtung (23) gebildet und in der Fernbedienung (25) angeordnet werden. Das Softwaremodul ist als Computerprogrammprodukt ausgebildet und in der Steuereinrichtung (23) gespeichert.

In einer anderen und nicht dargestellten Variante kann z.B. die Steuereinheit (24) in der Fernbedienung (25) angeordnet sein, wobei die Antriebseinheiten (14) mit Motorsteuerungen ausgerüstet sind und mit der Steuereinheit (24) in geeigneter Weise, z.B. drahtlos, kommunizieren. Das Ermittlungsmodul (1) kann in einem solchen Fall als Softwaremodul und als Computerprogrammprodukt ausgebildet und in der Steuereinheit (24) der Fernbedienung (25) gespeichert sein. Durch die Hardwarekomponenten der Steuereinheit (24) ist ein Hardwaremodul entbehrlich. Alternativ kann ein Hardwaremodul zusätzlich zur Steuereinheit (24) in der Fernbedienung (25) angeordnet sein.

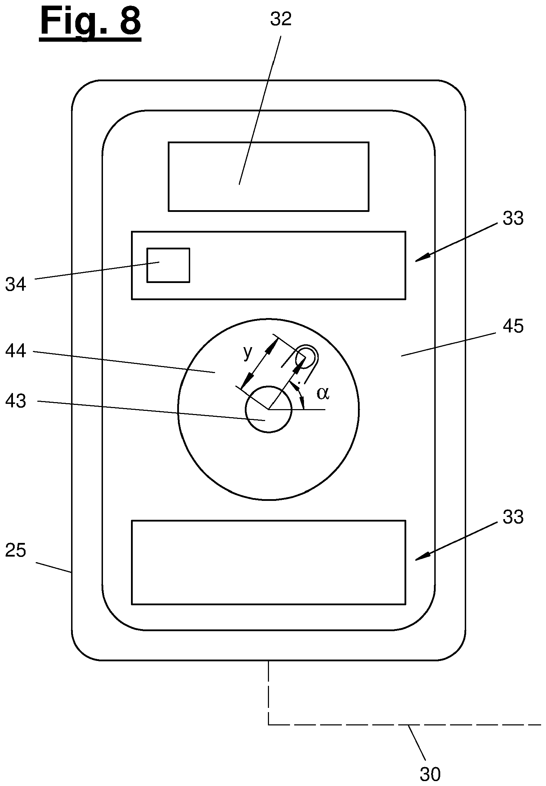

Figur 8 zeigt eine weitere Variante der Fernbedienung (25) und des Ermittlungsmoduls (1). Die Fernbedienung (25) ist in diesem Fall als universeller tragbarer Computer, z.B. als Smartphone, Tablet oder dgl., ausgebildet und weist einen Monitor (45) auf. Der Monitor (45) ist z.B. als Touchscreen ausgebildet.

Das Ermittlungsmodul (1) ist z.B. in der Fernbedienung (25) bzw. im tragbaren Computer angeordnet und nutzt dessen Hardware. Das Ermittlungsmodul (1) ist in diesem Fall als Softwarekomponente bzw. als besagtes Computerprogrammprodukt, ausgebildet und beinhaltet die erwähnten Kommunikations-, Steuer- und Berechnungsprogramme. Das Softwaremodul kann als App ausgebildet sein, die auf den universellen und auch zu anderen Zwecken nutzbaren tragbaren Computer aufgespielt und gespeichert werden kann. Das Ermittlungsmodul (1) bzw. die App kann über eine Steuer- und Signalverbindung (30) mit dem Rangiersystem (2) des Anhängers (3) in geeigneter Weise kommunizieren. Dies kann z.B. drahtlos per Funk, Bluetooth, W-LAN, Infrarot oder auf andere Weise geschehen. Hierbei können bereits vorhandene Kommunikationsmittel des tragbaren Computers genutzt werden. Am Rangierantriebssystem (2) ist ein entsprechendes Kommunikationsmittel (31) angeordnet, z.B. an einer Steuereinheit (24). Dies kann z.B. eine Motorsteuerung sein, die mehrfach und an allen Antriebseinheiten (14) angeordnet ist.

Die als tragbarer Computer ausgebildete und mit einem Touchscreen ausgerüstete Fernbedienung (25) mit der App kann weitere vorteilhafte Funktionen mit eigener erfinderischer Bedeutung haben, die auch ohne die Ermittlungstechnik und das Ermittlungsmodul (1) genutzt werden können.

Die App kann auf dem Touchscreen ein oder mehrere Bedienmittel (33) generieren. Bei Einsatz der Massenermittlungstechnik können eine Anzeige (32) und ein Auslöser (34) auf dem Touchscreen generiert werden. Andere Bedienmittel (33) können zur Fernsteuerung des Rangierantriebssystems (2) genutzt werden. Hierbei kann ein Bedienmittel (33) als sensitives Steuerfeld (35) für eine Fernsteuerung der Rangiersystems (2) und der Anhängerbewegungen, insbesondere für die Fahrtrichtung und für die Geschwindigkeit des abgekuppelten Anhängers (3) ausgebildet sein. Über das sensitive Steuerfeld (35) kann der Anhänger (3) bei der Fahrt gelenkt werden.

Das sensitive Steuerfeld (35) weist z.B. ein Zentrum (43) und eine umgebende, bevorzugt konzentrisch ringförmige Sensorfläche (44) auf, mit der Fingerpositionen und ggf. Fingerbewegungen eines Bedieners nach Richtung und Abstand vom Zentrum (43) aufgenommen und zur Steuerung von Fahrtrichtung und Geschwindigkeit des abgekuppelten Anhängers (3) ausgewertet werden können. Figur 8 verdeutlicht schematisch den Finger und die hiervon kontaktierte Druck- und Sensorstelle im Sensorfeld (44).

Über den Winkel ($\alpha$) gegenüber einem Bezug, z.B. der zentralen Horizontallinie, kann die Fahrtrichtung zum Lenken des Anhängers (3) eingegeben werden. Der Abstand (y) des besagten Druck- und Sensorpunktes vom Zentrum (43) markiert die gewünschte Geschwindigkeit der gelenkten Anhängerbewegung. Je größer der Abstand (y) ist, desto schneller fährt z.B. der vom Rangierantriebssystem (2) angetriebene Anhänger (3). Während der Fahrt können die Anhängerbewegungen vom Bediener optisch erfasst und bedarfsweise durch Veränderung der Fingerposition und des Winkels ($\alpha$) korrigiert werden.

Figur 3 bis 7 zeigen Varianten des Rangierantriebssystems (2) und seiner Antriebseinheiten (14).

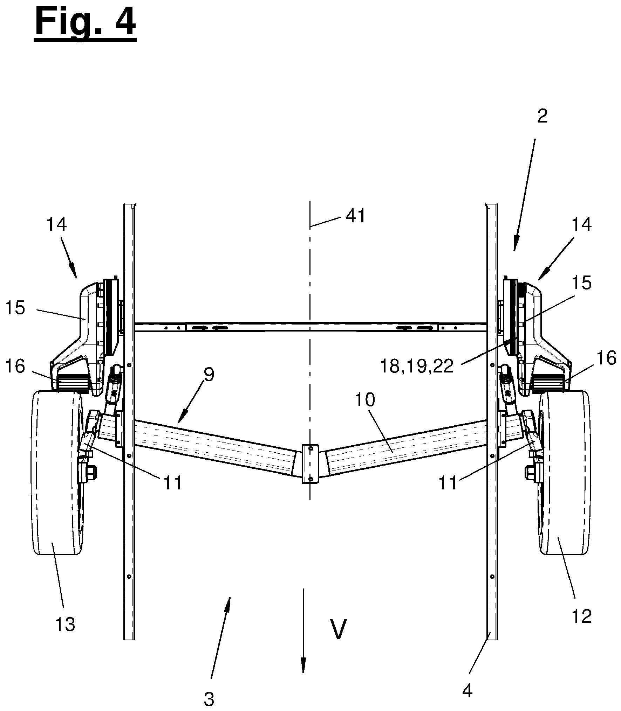

In Figur 3 und 4 ist eine Ausbildung der Antriebseinheiten (14) als Mover mit einem bevorzugt elektromotorischen Antriebsmittel (15) und einem Treibmittel (16) mit einer an das zugeordnete Anhängerrad (12,13) bevorzugt umfangseitig zustellbaren Treibrolle gezeigt. Die Antriebseinheit (14) kann gemäß Figur 3 und 4 wahlweise in Anhängerlängsachse (41) vor oder hinter einem zugeordneten Anhängerrad (12,13) am Chassis (4) montiert werden.

Figur 3 und 4 verdeutlichen außerdem eine bevorzugte Ausführungsform der Antriebseinheit (14), die eine am Chassis (4) montierbare und längs gerichtete sowie bedarfsweise verstellbare Konsole aufweist, an der das Antriebsmittel (15) zusammen mit der Treibrolle mittels einer steuerbaren linearen Zustelleinrichtung entlang der Anhängerlängsachse (41) bewegt und zugestellt werden kann.

Figur 3 verdeutlicht eine Montagemöglichkeit mit einem unterhalb des Chassis (4) oder durch dessen Längsträger erstreckten Tragbalken. Bei der in Figur 4 und der Draufsicht gezeigten Variante sind die Konsolen der Antriebseinheiten (14) jeweils an der Außenseite der aufrechten Mittelstege der Längsträger des Chassis (4) befestigt, ggf. unter Einbau von Abstandselementen. Die Längsträger sind als abgewinkelte und bevorzugt abgekantete Metallprofile mit einem z.B. Z-, L-, C- oder S-förmigen Querschnitt ausgebildet. Zwischen den Längsträgern kann gemäß Figur 4 eine quer gerichtete Stützstrebe angeordnet und mit endseitigen Stütz- und Montageplatten innenseitig an den Mittelstegen befestigt werden. Hierbei können über Schrauben oder dgl. die Konsolen und die Abstandselemente mit den Mittelstegen und mit den Stütz- und Montageplatten verbunden werden.

Figur 2 und 4 verdeutlichen außerdem eine Ausbildung einer Achsanordnung (9) mit einer Radlenkerachse. Diese weist einen z.B. hohlen, rohrartigen Achskörper (10) auf, an dessen beidseitigen Enden jeweils ein Radlenker (11) drehbar gelagert und an seinem freien Ende mit jeweils einem der beidseitigen Anhängerräder (12,13) drehbar verbunden ist. Die Radlenkerachse ist z.B. in Figur 2 als Längslenkerachse mit einem geraden Achskörper und in Figur 4 als Schräglenkerachse mit einem pfeilförmigen Achskörper (10) ausgebildet. Die Achsanordnung (9) kann z.B. eine Achsfederung, insbesondere eine Gummifederung oder eine Drehstabfederung aufweisen. Sie kann alternativ oder zusätzlich andere Federmittel, z.B. Luftfedern, Schraubfedern oder dgl. umfassen.

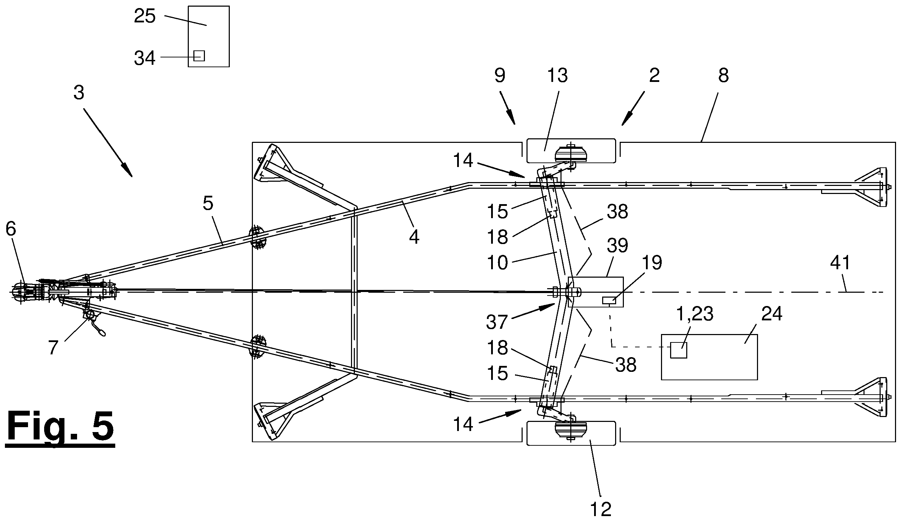

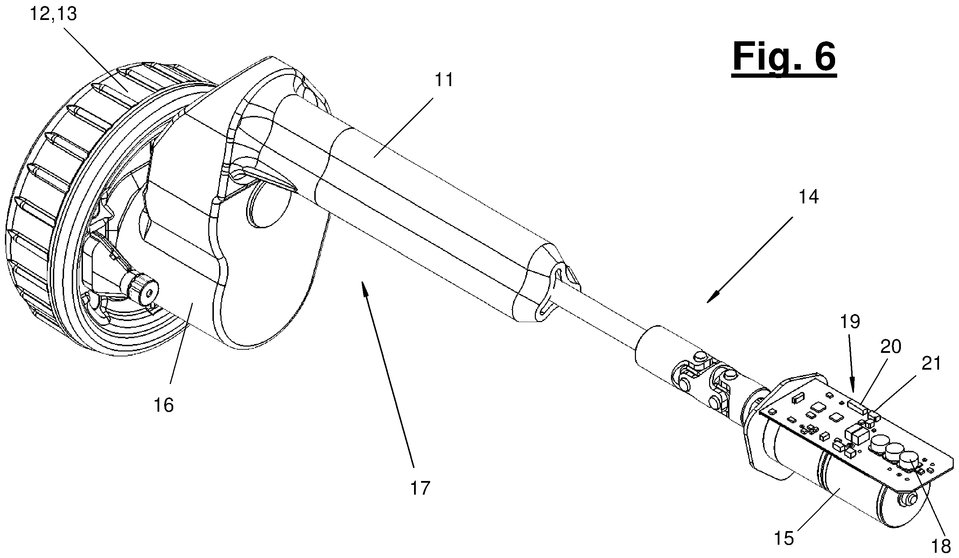

Figur 5 und 6 verdeutlichen eine Variante einer Antriebseinheit (14), die als integrierter Rangierantrieb ausgebildet ist. Das bevorzugt elektromotorische Antriebsmittel (15) ist dabei in oder an einem hohlen Achskörper (10) montiert. Wie Figur 5 und 6 verdeutlichen, weist das Treibmittel (16) eine vom Antriebsmittel (15) über eine Welle und ein Getriebe rotierend angetriebene und mit einer Achse des zugeordneten Anhängerads (12,13) gekoppelte Treibwelle auf. Das Getriebe kann sich entlang des Radlenkers (11) vom Achskörper (10) zur Achse des Anhängerrads (12,13) erstrecken. Der vom Antriebsmittel (15) und vom Treibmittel (16) gebildete Antriebstrang (17) kann eine steuerbare Kupplung zum Trennen der Antriebsverbindung für die Gespannfahrt und für höhere Fahrgeschwindigkeiten aufweisen.

Der Messwertgeber (18) für das Moment ist z.B. am Antriebsmittel (15) angeordnet und erfasst den Motorstrom. Der Messwertgeber (19) für die Beschleunigung kann z.B. am Antriebsmittel (15) angeordnet sein und eine Geberteil (20) für die Motordrehzahl und ein Geberteil (21) für die Zeit umfassen.

In einer anderen und nicht dargestellten Ausführungsform können die Antriebseinheiten (14) mit einem bevorzugt elektromotorischen Antriebsmittel (15) und einer Treibwelle sowie einem eventuellen Getriebe als Radnabenmotoren ausgebildet sein. Je nach Motorauslegung können die Radnabenmotoren nur für den Rangierbetrieb und für niedrigere Geschwindigkeiten ausgelegt sein und über eine Kupplung zur Trennung der Antriebsverbindung für die Gespannfahrt ausgerüstet sein. In einer anderen Ausführung können die Radnabenmotoren für höhere Fahrgeschwindigkeiten und auch für den Gespannbetrieb ausgelegt und nutzbar sein.

Figur 5 zeigt außerdem eine Kombination des Ermittlungsmoduls (1) mit einer Fahrstabilisierungseinrichtung, insbesondere einer Schlingerbremse (37). Die Schlingerbremse (27) dient dazu, bei instabilen Fahrbewegungen, insbesondere Schleuderbewegungen, des Anhängers (3) die Radbremsen an den Anhängerrädern (12,13) eigenständig und unabhängig von einem Auflaufverhalten des Anhängers (3) zu betätigen. Die Schlingerbremse (37) kann dabei eine Auflaufbremse des Anhängers (3) überlagern. Figur 5 zeigt eine mechanische Betriebsbremse und Auflaufbremse mit einem Bremsgestänge, einem Waagbalken und hiervon ausgehenden Bremszügen (38) zu den Radbremsen. Die Schlingerbremse (37) weist einen eigenständig steuerbaren Aktor (39) auf, der die Bremszüge (38) bei den besagten instabilen Fahrbewegungen betätigen und die Radbremsen anziehen kann. Der Aktor (39) kann z.B. ein steuerbarer Elektromotor zum Anziehen und Lösen der Bremszüge (38) sein.

Die Schlingerbremse (37) kann zur Detektion von instabilen Fahrbewegungen einen Beschleunigungssensor aufweisen, der Anhängerbeschleunigungen in Richtung der Anhängerlängsachse (41) messen kann. Der Beschleunigungssensor kann mit dem Ermittlungsmodul (1) verbunden werden und kann den Messwertgeber (19) für die Anhängerbeschleunigung bilden.

Andererseits kann das Ermittlungsmodul (1) den ermittelten Wert der Masse (m) an die Schlingerbremse (37) und deren Steuerung übermitteln. Diese Steuerung kann anhand der bekannten Anhängermasse den anfänglichen Bremseingriff der Schlingerbremse (37) und die Betätigungskraft der Radbremsen last- und masseabhängig einstellen. Je höher die Anhängermasse ist, desto stärker ist die von der Schlingerbremse (37) aufgebrachte Bremskraft der Radbremsen.

Figur 5 verdeutlicht schematisch eine Ausbildung des Ermittlungsmoduls (1) ähnlich wie in Figur 1. Das Ermittlungsmodul (1) kann als Softwaremodul oder als kombiniertes Hardware- und Softwaremodul ausgebildet sein. Es kann z.B. der anhängerfesten Steuereinheit (24) zugeordnet sein. Die Fernbedienung (25) kann einen Auslöser (34) zum Starten des Ermittlungsmoduls (1) und des Ermittlungsprozesses aufweisen.

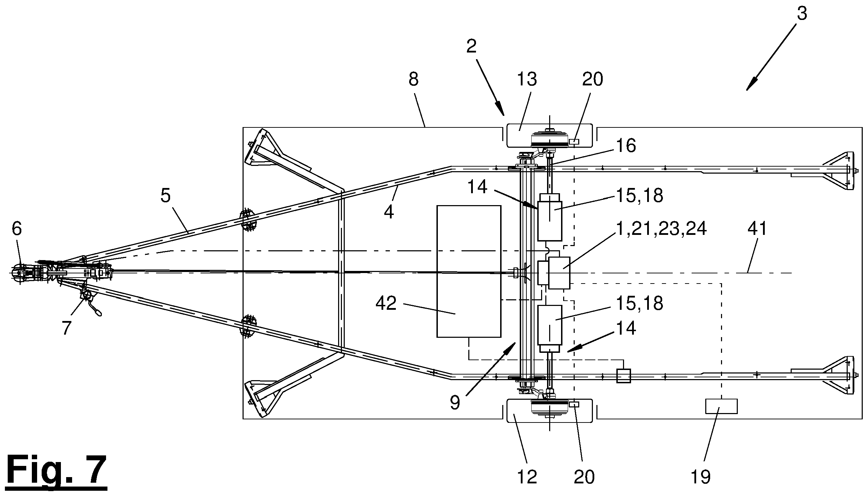

Figur 7 zeigt eine weitere Variante eines Rangierantriebssystems (2), bei der die Antriebseinheiten (14) als bevorzugt rekuperationsfähige elektrische Achse ausgebildet sind. Sie weisen jeweils ein elektromotorisches Antriebsmittel (15), z.B. einen Wechselstrommotor, und ein Treibmittel (16) mit einer rotierend angetriebenen und mit einer Achse des zugeordneten Anhängerrads (12,13) gekoppelten Treibwelle sowie ggf. einem Getriebe auf. Die einzeln oder mehrfach vorhandenen Achsen der Achsanordnung (9) sind z.B. als Länglenkerachse(n) ausgebildet.

Die elektromotorischen Antriebsmittel (15) können in einen Generatorbetrieb umgeschaltet werden oder können mit einem Generator gekoppelt werden. Diese Ausbildung erlaubt ein generatorisches Bremsen und eine Umwandlung der Bremsenergie in elektrische Energie, die in einem angeschlossenen Energiespeicher (42), z.B. einem elektrischen Akku, gespeichert werden kann. Die elektrische Achse kann eine Motor- und Batteriesteuerung mit einer Steuereinheit (24) aufweisen, welche die verschiedenen Komponenten steuern und ggf. regeln kann. Das Ermittlungsmodul (1) kann in der vorgenannten Weise der Steuereinheit (24) oder einer nicht dargestellten Fernbedienung (25) zugeordnet sein.

Das Rangierantriebssystem (2) kann z.B. einen Messwertgeber (19) für die Beschleunigung mit einem Geberteil (20) zur Drehzahlerfassung an einem Anhängerrad (12,13) und mit einem als Zeitglied ausgebildeten Geberteil (21) am Ermittlungsmodul (1), an der Steuereinheit (24) oder an anderer Stelle aufweisen. Es gibt auch die dargestellte Möglichkeit, einen Beschleunigungssensor als Messwertgeber (19) einzusetzen.

Das gezeigte Rangierantriebssystem (2) mit der elektrischen Achse kann auch in einem Fahrbetrieb im Gespann mit einem Zugfahrzeug eingesetzt werden, wobei die elektromotorischen Antriebsmittel (15) bedarfsweise das Zugfahrzeug unterstützen und den Anhänger (3) antreiben, z.B. bei einer Bergfahrt. Die gespeicherte elektrische Energie wird dazu aus dem Energiespeicher (42) zurück in die elektromotorischen Antriebsmittel (15) gespeist. Die elektrische Achse kann elektrische Umrichter aufweisen.

Abwandlungen der gezeigten und beschriebenen Ausführungsformen sind in verschiedener Weise möglich. Insbesondere können die verschiedenen Varianten des Ermittlungsmoduls (1), der Messwertgeber (18,19) und des Rangierantriebssystems (2), insbesondere der Antriebseinheiten (14), beliebig miteinander kombiniert werden. Ferner sind andere konstruktive Ausbildungen des Rangierantriebssystems (2) und der Antriebseinheiten (14) möglich. In einer Variante ist z.B. ein einzelnes zentrales Antriebsmittel (15) für den Antrieb von beiden beidseitigen Anhängerradern (12,13) möglich, wobei die Treibmittel (16) zum jeweiligen Anhängerrad (12,13) unterschiedlich steuerbar sind. Hierbei können Getriebe der Treibmittel (16) in unterschiedlicher Weise, z.B. mit unterschiedlichen Übersetzungen, schaltbar sein. Hierdurch lassen sich mit einem zentralen Antriebsmittel (15) die Anhängerrader (12,13) individuell antreiben. In einer nicht dargestellten Ausführungsvariante wird nur eine einmalige Fahrbewegung des Anhängers (3) mit nur einem vorbeschriebenen Ermittlungsvorgang für die Masse (m) ausgeführt.

BEZUGSZEICHENLISTE

| 1 | Ermittlungsmodul |
| 2 | Rangierantriebsystem |
| 3 | Anhänger |
| 4 | Chassis |
| 5 | Deichsel |
| 6 | Anhängerkupplung |
| 7 | Stützmittel, Stützrad |
| 8 | Aufbau |
| 9 | Achsanordnung |
| 10 | Achskörper |
| 11 | Radlenker |
| 12 | Anhängerrad |
| 13 | Anhängerrad |
| 14 | Antriebseinheit |
| 15 | Antriebsmittel, Antriebsmotor |
| 16 | Treibmittel, Getriebe |
| 17 | Antriebsstrang |
| 18 | Messwertgeber Antriebsmoment, Strom |
| 19 | Messwertgeber Beschleunigung |
| 20 | Geberteil Drehzahl, Geschwindigkeit |
| 21 | Geberteil Zeit |
| 22 | Bremseinrichtung |
| 23 | Steuereinrichtung |
| 24 | Steuereinheit |
| 25 | Bedieneinrichtung, Fernbedienung |
| 25' | Smartphone |
| 26 | Recheneinheit |
| 27 | Speicher, Programmspeicher |
| 28 | Speicher, Datenspeicher Messwerte |
| 29 | Speicher, Datenspeicher Vorgabewerte |
| 30 | Steuer- und Signalverbindung |
| 31 | Kommunikationsmittel |
| 32 | Anzeige |
| 33 | Bedienmittel |
| 34 | Auslöser |
| 35 | Steuerfeld |
| 36 | Energieversorgung |
| 37 | Schlingerbremse |

| 38 | Bremszug |
| 39 | Aktor |
| 40 | Untergrund |
| 41 | Anhängerlängsachse |
| 42 | Energiespeicher |
| 43 | Zentrum |
| 44 | Sensorfläche, Sensormatrix |
| 45 | Monitor, Touchscreen |

| a | Fahrstrecke |
| m | ermittelte Masse des abgekuppelten Anhängers |
| r | dynamischen Rollradius |
| ü | Übersetzung des Antriebsstrangs |
| η | Wirkungsgrad der Antriebseinheit |

| V | Fahrtrichtung vorwärts |
| R | Fahrtrichtung rückwärts |

**Patentansprüche**

1. Ermittlungsmodul ausgebildet zur Ermittlung der Masse (m) eines abgekuppelten Anhängers (3), der ein Rangierantriebssystem (2) aufweist, welches mindestens eine Antriebseinheit (14) für den drehenden Antrieb von beidseitigen Anhängerrädern (12,13) und einen Messwertgeber (18) für das Antriebsmoment oder ein Äquivalent sowie einen Messwertgeber (19) für die Antriebsbeschleunigung oder ein Äquivalent umfasst, **dadurch gekennzeichnet, dass** das Ermittlungsmodul (1) dazu ausgebildet ist, bei einem Ermittlungsprozess eine Steuer- und Signalverbindung (29) mit dem Rangierantriebssystem (2) zu bilden und das Rangierantriebssystem (2) derart zu steuern, dass es den abgekuppelten Anhänger (3) entlang einer bevorzugt ebenen Fahrstrecke (x) aus dem Stillstand mit maximaler Beschleunigung bis zu einer konstanten Fahrt mit maximaler Geschwindigkeit bewegt, wobei das Ermittlungsmodul (1) die Messwerte der Messwertgeber (18,19) aufnimmt und daraus die Masse (m) des abgekuppelten Anhängers (3) berechnet.

2. Ermittlungsmodul nach Anspruch 1, wobei die mindestens eine Antriebseinheit (14) ein Antriebsmittel (15) mit einem elektrischen Gleichstrommotor aufweist, **dadurch gekennzeichnet, dass** das Ermittlungsmodul (1) dazu ausgebildet ist, den Messwert für den maximalen Motorstrom (I) und den bei konstanter Fahrt anliegenden Messwert für den niedrigeren Motorstrom vom Messwertgeber (18) aufzunehmen, wobei auf Basis der Messwertdifferenz Δ I das Antriebsmoment ermittelt wird.

3. Ermittlungsmodul nach Anspruch 1 oder 2, **dadurch gekennzeichnet, dass** das Ermittlungsmodul (1) dazu ausgebildet ist, bei einem Ermittlungsprozess eine Steuer- und Signalverbindung (29) mit dem Rangierantriebssystem (2) zu bilden und das Rangierantriebssystem (2) derart zu steuern, dass es den abgekuppelten Anhänger (3) mit reversierenden Fahrbewegungen über eine Fahrstrecke (x) in Vorwärtsrichtung (V) und in Rückwärtsrichtung (R) bewegt, wobei das Ermittlungsmodul (1) bei diesen Fahrbewegungen jeweils die Messwerte der Messwertgeber (18,19) aufnimmt und daraus die Masse (m) des abgekuppelten Anhängers (3) berechnet.

4. Ermittlungsmodul nach einem der vorhergehenden Ansprüche, **dadurch gekennzeichnet, dass** das Ermittlungsmodul (1) das Rangierantriebssystem (2) derart ansteuert, dass die Länge einer gerade und bevorzugt entlang einer Anhängerlängsachse (41) ausgerichteten Fahrstrecke (x) 20 cm bis 1 m, bevorzugt 30 cm bis 50 cm, beträgt.

5. Ermittlungsmodul nach einem der vorhergehenden Ansprüche, **dadurch gekennzeichnet, dass** das Ermittlungsmodul (1) dazu ausgebildet ist, die ermittelte Masse (m) des Anhängers (3) anzuzeigen und/oder zu signalisieren.

6. Ermittlungsmodul nach einem der vorhergehenden Ansprüche, **dadurch gekennzeichnet, dass** das Ermittlungsmodul (1) dazu ausgebildet ist, den Ermittlungsprozess automatisch und eigenständig auszuführen.

7. Ermittlungsmodul nach einem der vorhergehenden Ansprüche, **dadurch gekennzeichnet, dass** das Ermittlungsmodul (1) die Antriebsbeschleunigung a aus dem Äquivalent der Antriebsgeschwindigkeit v über der Zeit t oder der Antriebsdrehzahl d über der Zeit t ermittelt und/oder das Antriebsmoment Mn einer Antriebseinheit (14) aus dem Äquivalent eines elektrischen Motorstroms der Antriebseinheit (14) ermittelt.

8. Ermittlungsmodul nach einem der vorhergehenden Ansprüche, **dadurch gekennzeichnet, dass** das Ermittlungsmodul (1) die Masse (m) des abgekuppelten Anhängers (3) nach einer Formel

$$m = M_{ges} \, / \, r * a_g$$

berechnet, wobei Mges das gesamte wirksame Antriebsmoment aller beteiligter Antriebseinheiten (14), r der dynamische Rollradius des Anhängerrads (12,13) und ag die ggf. gemittelte Antriebsbeschleunigung der beteiligten Antriebseinheiten (14) ist.

9. Ermittlungsmodul nach Anspruch 8, **dadurch gekennzeichnet, dass** das Ermittlungsmodul (1) das gesamte wirksame Antriebsmoment Mges aus der Summe der jeweiligen Antriebsmomente Mn der beteiligten Antriebseinheiten (14) nach den Formeln

$$M_{ges} \;=\; \sum\; M_n$$

und

$$M_n \;=\; MM_n * \ddot{u}_n * \eta_n$$

berechnet, wobei $MM_n$ das Motormoment der jeweiligen Antriebseinheit (14), $\ddot{u}_n$ die Übersetzung eines jeweiligen Antriebsstrangs und $\eta_n$ der Wirkungsgrad der jeweiligen Antriebseinheit (14) ist.

10. Ermittlungsmodul nach einem der vorhergehenden Ansprüche, **dadurch gekennzeichnet, dass** das Ermittlungsmodul (1) als Hardwaremodul und/oder als Softwaremodul ausgebildet ist, wobei insbesondere das Ermittlungsmodul (1) als App für einen universellen tragbaren Computer, insbesondere ein Smartphone, ein Tablet oder dgl., ausgebildet ist.

11. Rangierantriebssystem für einen abgekuppelten Anhänger (3), wobei das Rangierantriebssystem (2) mindestens eine Antriebseinheit (14) für den drehenden Antrieb von beidseitigen Anhängerrädern (12,13) und einen Messwertgeber (18) für das Antriebsmoment oder ein Äquivalent sowie einen Messwertgeber (19) für die Antriebsbeschleunigung oder ein Äquivalent umfasst, **dadurch gekennzeichnet, dass** das Rangierantriebssystem (2) mit einem Ermittlungsmodul (1) steuer- und signaltechnisch verbindbar oder verbunden ist, wobei das Ermittlungsmodul (1) die Masse (m) des abgekuppelten Anhängers (3) ermittelt und nach einem der Ansprüche 1 bis 10 ausgebildet ist.

12. Rangierantriebssystem nach Anspruch 11, **dadurch gekennzeichnet, dass** das Rangierantriebssystem (2) eine App für eine tragbare Fernbedienung (25), insbesondere einen universellen tragbaren Computer, umfasst, die auf einem Monitor (45), insbesondere einem Touchscreen, des tragbaren Computers ein oder mehrere Bedienmittel (33) für eine Steuerung des Rangiersystems (2) und des abgekuppelten Anhängers (3) sowie ggf. eine Anzeige (32) generiert.

13. Anhänger mit einem Chassis (4), einer bevorzugt starren Deichsel (5), einer Anhängerkupplung (6), einer Achsanordnung (9) mit beidseitigen Anhängerrädern (12,13) und einem Rangierantriebssystem (2), **dadurch gekennzeichnet, dass** das Rangierantriebssystem (2) nach einem der Ansprüche 11 oder 12 ausgebildet ist, wobei insbesondere der Anhänger (3) ein bevorzugt an der Deichsel (5) angeordnetes gleit- oder rollfähiges Stützmittel (7), insbesondere Stützrad, aufweist.

14. Verfahren zur Ermittlung der Masse (m) eines abgekuppelten Anhängers (3), der ein Rangierantriebssystem (2) aufweist, welches mindestens eine Antriebseinheit (14) für den drehenden Antrieb von beidseitigen Anhängerrädern (12,13) und einen Messwertgeber (18) für das Antriebsmoment oder ein Äquivalent sowie einen Messwertgeber (19) für die Antriebsbeschleunigung oder ein Äquivalent umfasst, **dadurch gekennzeichnet, dass** ein Ermittlungsmodul (1) bei einem Ermittlungsprozess eine Steuer- und Signalverbindung (29) mit dem Rangierantriebssystem (2) bildet und das Rangierantriebssystem (2) derart steuert, dass es den abgekuppelten Anhänger (3) entlang einer bevorzugt ebenen Fahrstrecke (x) aus dem Stillstand mit maximaler Beschleunigung bis zu einer konstanten Fahrt mit maximaler Geschwindigkeit bewegt, wobei das Ermittlungsmodul (1) die Messwerte der Messwertgeber (18,19) aufnimmt und daraus die Masse (m) des abgekuppelten Anhängers (3) berechnet.

15. Verfahren nach Anspruch 14, wobei die mindestens eine Antriebseinheit (14) ein Antriebsmittel (15) mit einem elektrischen Gleichstrommotor aufweist, **dadurch gekennzeichnet, dass** das Ermittlungsmodul (1) den Messwert für den maximalen Motorstrom (I) und den bei konstanter Fahrt anliegenden Messwert für den niedrigeren Motorstrom vom Messwertgeber (18) aufnimmt, wobei auf Basis der Messwertdifferenz $\Delta I$ das Antriebsmoment $M_n$ einer Antriebseinheit ermittelt wird, wobei das Ermittlungsmodul (1) die Antriebsbeschleunigung a sensorisch erfasst oder aus dem Äquivalent der Antriebsgeschwindigkeit v über der Zeit t oder der Antriebsdrehzahl d über der Zeit t ermittelt.

**Fig. 1**

**Fig. 2**

# Fig. 3

EP 4 047 330 A1

# Fig. 4

**Fig. 5**

**Fig. 6**

EP 4 047 330 A1

Fig. 7

# Fig. 8

# Fig. 9

**Europäisches Patentamt**
**European Patent Office**
**Office européen des brevets**

# EUROPÄISCHER RECHERCHENBERICHT

**Nummer der Anmeldung**

**EP 22 15 7492**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 20 2009 005524 U1 (KOBER AG [DE]) 2. Juli 2009 (2009-07-02) | 1,11,13, 14 | INV. G01G19/02 |
| A | * Zusammenfassung; Anspruch 1; Abbildung 1 * * Absatz [0085] * ----- | 2-10,12, 15 | G01G19/08 |

**RECHERCHIERTE SACHGEBIETE (IPC)**

**G01G**

Der vorliegende Recherchenbericht wurde für alle Patentansprüche erstellt

| Recherchenort | Abschlußdatum der Recherche | Prüfer |
|---|---|---|
| **Den Haag** | **22. Juni 2022** | **Katerbau, Ragnar** |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.....................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 15 7492

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-06-2022

| Im Recherchenbericht angeführtes Patentdokument | Datum der Veröffentlichung | Mitglied(er) der Patentfamilie | Datum der Veröffentlichung |
|---|---|---|---|
| DE 202009005524 U1 | 02-07-2009 | AT 546340 T | 15-03-2012 |
| | | DE 202009001675 U1 | 26-11-2009 |
| | | DE 202009005524 U1 | 02-07-2009 |
| | | DE 202009019179 U1 | 08-09-2017 |
| | | EP 2138387 A1 | 30-12-2009 |
| | | EP 2455275 A2 | 23-05-2012 |
| | | EP 2455276 A2 | 23-05-2012 |
| | | EP 2455277 A2 | 23-05-2012 |
| | | EP 2455278 A2 | 23-05-2012 |

Für nähere Einzelheiten zu diesem Anhang : siehe Amtsblatt des Europäischen Patentamts, Nr.12/82

**EP 4 047 330 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3128299 A1